## Europäisches Patentamt
## European Patent Office
## Office européen des brevets

(19)

(11) Publication number: **0 007 166**
**B1**

(12)

# EUROPEAN PATENT SPECIFICATION

(45) Date of publication of patent specification: **24.11.82**

(51) Int. Cl³: **B 29 C 27/08**

(21) Application number: **79301007.5**

(22) Date of filing: **30.05.79**

(54) **A method of bonding together thermoplastic sheets using high-frequency vibratory energy, and article comprising regions of thermoplastic sheets bonded together by this method.**

(30) Priority: **30.05.78 US 910397**

(43) Date of publication of application:
**23.01.80 Bulletin 80/2**

(45) Publication of the grant of the patent:
**24.11.82 Bulletin 82/47**

(84) Designated Contracting States:
**DE FR GB**

(56) References cited:
FR - A - 1 257 895
FR - A - 1 495 999
US - A - 3 765 973
US - A - 3 819 437

(73) Proprietor: **EASTMAN KODAK COMPANY**
**343 State Street**
**Rochester, New York 14650 (US)**

(72) Inventor: **Yen, Edward C.**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

# A method of bonding together thermoplastic sheets using high-frequency vibratory energy, and article comprising regions of thermoplastic sheets bonded together by this method

This invention relates to a method of bonding together thermoplastic sheets using high frequency vibratory energy and to articles of manufacture produced by this method.

In the ultrasonic welding of thermoplastic articles it is known to use an energy director, which may be, for instance, an integrally formed rib or a separate strip of material, at an interface to concentrate the energy released to a limited region and so accelerate melting. This is exemplified in U.S. Patent 3,819,437 which describes a method of sonically welding together the edges of thermoplastic sheets. The edges are specially formed, being tapered to facilitate the obtaining of a joint of substantially the same thickness as the sheet and provided with sets of longitudinally extending ridge portions which serve both as energy directors and to maintain the sheets in proper alignment.

U.S. Patent Specification No. 3,765,973 describes the welding together, using high-frequency vibratory energy, of thermoplastic parts by means of a separate energy concentrating element, possibly of thermoplastic or metallic screening, disposed between the surfaces to be welded together.

According to the present invention there is provided a method of bonding together superposed layers of thermoplastic sheet material by providing elongate energy directors between the layers and applying a compressive force and high-frequency vibratory energy to the layers characterised in that at least three layers are simultaneously bonded together, a set of elongate energy directors being provided at each interface, the energy directors located at the same interface being oriented so that they do not cross each other but cross the energy directors at the or each adjacent interface.

The high-frequency vibratory energy is preferably ultrasonic but may be of any frequency which enables bonding to be effected.

The present invention has the advantage of facilitating the bonding of three or more overlying regions of thermoplastic sheet simultaneously.

Also provided in accordance with the present invention is an article of manufacture comprising regions of thermoplastic sheet bonded together by the method of the present invention.

An article in accordance with the present invention is particularly suitable as a mount for a test element such as that disclosed in U.S. Patent Specification No. 3,992,158. Such a test element is usable in apparatus disclosed in German Offenlegungsschrift 2,755,334.0 for analysis of biological fluids.

In the detailed description of the preferred embodiment of the invention presented below, reference is made to the accompanying drawings in which:

Fig. 1 is an exploded view from below of a test mount in accordance with the present invention, and a test element;

Fig. 2 is a top plan view of the test mount of Fig. 1;

Fig. 3 is a top perspective view of the assembled test mount of Fig. 1 before bonding, with the test element exploded therefrom;

Fig. 4 is a side view of the test mount of the preceding figures clamped between a sonic horn and anvil; and

Fig. 5 is a top perspective view of a completed test mount and test element.

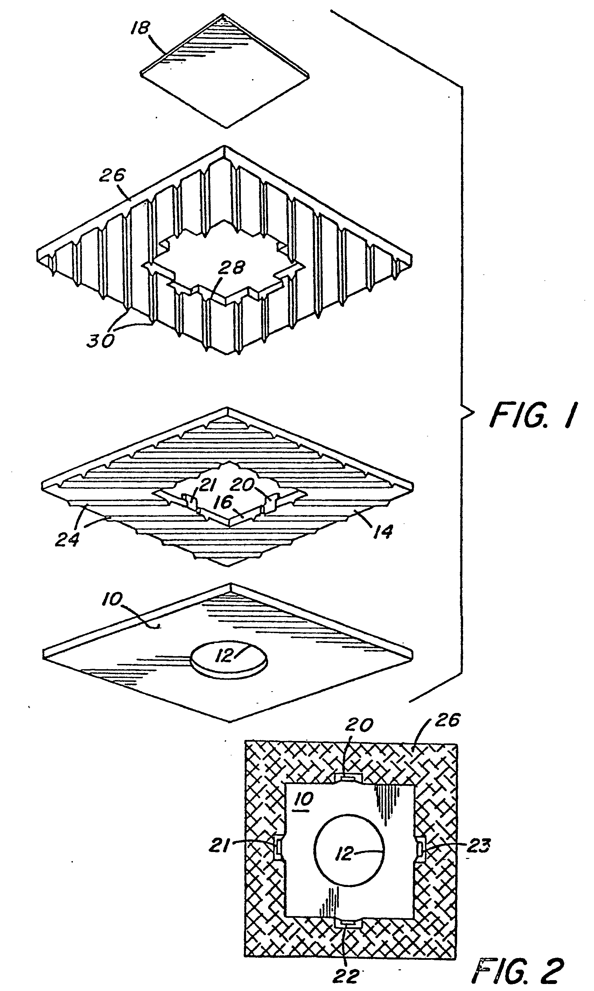

Fig. 1 is an exploded view of a test mount and a test element suitable for use with chemical analysis equipment as described in aforementioned U.S. Patent No. 3,992,158. The bottommost layer shown in the figure is a sheet 10 of thermoplastic web material such as polystyrene. Other suitable materials might include polypropylene or polyimide depending upon the intended use and desired characteristics. An aperture 12 extends through sheet 10 to permit a drop of test fluid to pass therethrough. (When used in equipment of the kind referred to, the test mount is disposed with the aperture 12 uppermost). Both upper and lower surfaces of sheet 10 are preferably flat.

Above sheet 10 in Fig. 1, a second sheet 14 of similar material and size is provided with an aperture 16 shaped to receive an analytical test element 18 of the type hereinbefore described. As best seen in Fig. 2, four tabs 20—23 extend in a direction away from sheet 10. It will be understood from the description which follows that tabs 20—23 are provided to retain test element 18 in aperture 16 and, for that purpose, may be carried on any of the three thermoplastic sheets which are joined to form the test element mount.

A plurality of elongate energy directors in the form of linear ribs 24 extend from the surface of sheet 14 which faces sheet 10. The ribs may be formed on the sheet during extrusion. When sheets 10 and 14 are brought together, contact is made only between ribs 24 and the flat surface of sheet 10. The ribs are shown as being parallel to each other, of triangular cross-section, and as extending diagonally across sheet 14. Conventional flash traps, not shown, may be provided adjacent to the energy director elements to receive excess material when the elements melt.

Above sheet 14 in Fig. 1, is a third sheet 26 of size and material similar to sheets 10 and 14. An aperture 28 extends through sheet 26 and is sized to pass test element 18 for insertion into aperture 16. The edges of sheet 26 which define aperture 28 have recesses to receive tabs 20—23 which in the present embodiment are integral with sheet 14. A plurality of elongate energy directors in the form of ribs 30 are provided on the surface of sheet 26 which faces sheet 14. Ribs 30 are similar to ribs 24 but are disposed at an angle to ribs 24. Thus when viewed from above, ribs 30 cross ribs 24. This arrangement is shown in Fig. 2 wherein each broken line is intended to represent one of the ribs. For clarity, the test element is not shown in Fig. 2.

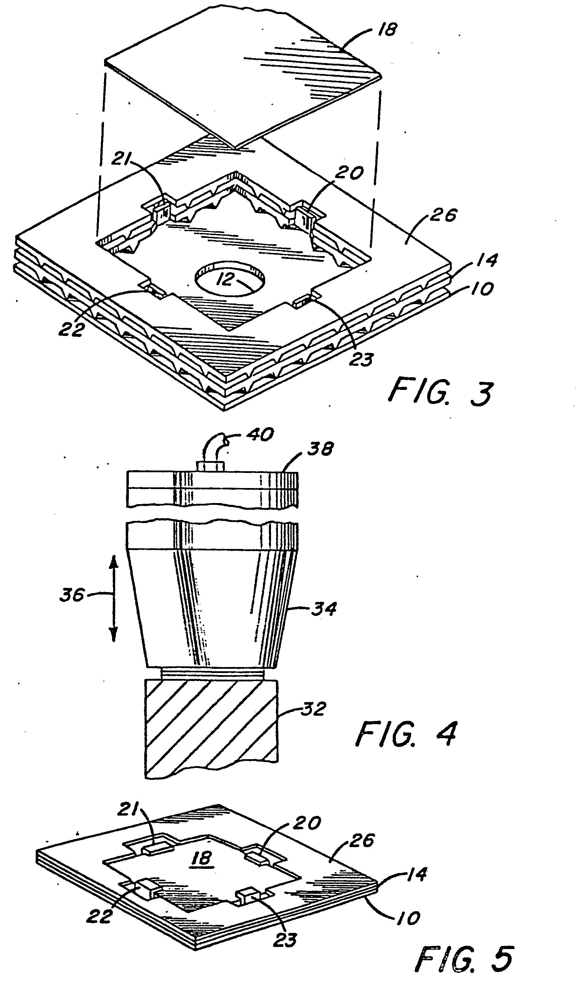

Once fully assembled, as shown in Fig. 3, the test mount and element are placed on an anvil 32 (Fig. 4) below a sonic horn 34 adapted for reciprocating movement toward and away from anvil 32 as indicated by arrow 36. Horn 34 is coupled to a press, of conventional design such as shown in U.S. Patent No. 3,661,661, for producing between horn 34 and anvil 32, a compressive force holding the assembled mount and test element therebetween. The sonic horn is driven by an electromechanical transducer 38, which produces high frequency vibrations in response to electrical signals via a conductor 40.

The force of the press and the high frequency vibrations will be transmitted between sheets 26 and 14 through ribs 30 and between sheets 14 and 10 through ribs 24. Along each rib 24 or 30, the force transmitted will be greatest at the positions where that rib crosses the ribs of the other rib set. Thus, the ribs concentrate the compressive force at those positions during the bonding operation.

When horn 34 is brought into engagement with the assembled mount, vibratory energy is transferred to the mount. Simultaneously, a compressive force urges sheets 10, 14 and 26 towards one another so that vibratory energy is dissipated at the positions where energy director elements 24 and 30 cross. This condition causes rapid melting and flowing of thermoplastic material. During the initial period of bonding, tabs 20—23 are bent down over the top of test element 18 to secure the element in the mount as shown in Fig. 5.

Upon terminating the vibratory energy, a brief dwell period is provided during which the compressive force is maintained on the sheets. As the thermoplastic material cools, a bond forms, fixing the sheets together. A similar process but without the energy director arrangement of the present invention would produce relatively weak, sporadic weld spots which would take longer to form and/or would be less satisfactory in appearance because of a lack of concentration of vibrational energy during the melting step.

A preferred embodiment of the invention has been described above. It is to be understood that other embodiments of the invention may differ from the above described embodiment. For example, the elongate energy directors may be curved; they may be on surfaces of the sheets other than those shown in the drawings and described above; they may be of other than triangular cross-section; they need not be integral with the sheets and when they are separate strips these need not be of a thermoplastic material.

### Claims

1. A method of bonding together superposed layers of thermoplastic sheet material by providing elongate energy directors between the layers and applying a compressive force and high-frequency vibratory energy to the layers characterised in that at least three layers are simultaneously bonded together, a set of elongate energy directors being provided at each interface, the energy directors located at the same interface being oriented so that they do not cross each other, but cross the energy directors at the or each adjacent interface.

2. A method according to Claim 1 wherein the energy directors of each set are straight and in parallel alignment.

3. A method according to Claim 1 or 2, characterised in that the application of the high-frequency vibratory energy is discontinued before the compressive force is removed.

4. An article comprising regions of thermoplastic sheet bonded together by a method according to any of Claims 1 to 3.

### Revendications

1. Procédé pour joindre ensemble des couches superposées d'un matériau en feuille thermoplastique selon lequel on dispose des concentrateurs d'énergie allongés entre les couches et on soumet ces dernières à une force de compression et à une énergie vibratoire à haute fréquence, caractérisé en qu'on joint simultanément ensemble au moins trois couches, une série de concentrateurs d'énergie allongés étant disposée à chaque interface, les concentrateurs d'énergie disposés à la même interface étant orientés de manière à ne pas se crosier les uns les autres mais à croiser les concentrateurs d'énergie à l'une ou chacune des interfaces voisines.

2. Procédé conforme à la revendication 1 où les concentrateurs d'énergie de chaque série sont rectilignes et alignés parallèlement.

3. Procédé conforme à la revendication 1 ou 2 caractérisé en ce que l'application d'énergie vibratoire à haute fréquence est interrompue avant que la force de compression soit supprimée.

4. Article comprenant des régions de feuille thermoplastique réunies ensemble par le procédé conforme à l'une quelconque des revendications 1 à 3.

**Patentansprüche**

1. Verfahren zum Verschweißen übereinander angeordneter Schichten von thermoplastischem Folienmaterial, bei dem langgestreckte Energierichtungsgeber zwischen den Schichten angeordnet und diese Schichten einer Druckkraft und hochfrequenter Schwingungsenergie ausgesetzt werden, dadurch gekennzeichnet, daß mindestens drei Schichten gleichzeitig miteinander verschweißt werden, wobei eine Gruppe langgestreckter Energierichtungsgeber an jeder Grenzfläche vorgesehen und die an derselben Grenzfläche angeordneten Energierichtungsgeber su ausgerichtet sind, daß sie sich gegenseitig nicht überschneiden, die Energierichtungsgeber an der oder an jeder benachbarten Grenzfläche jedoch kreuzen.

2. Verfahren nach Anspruch 1, dadurch gekennzeichnet, daß die Energierichtungsgeber einer jeden Gruppe gerade und parallel zueinander verlaufen.

3. Verfahren nach Anspruch 1 oder 2, dadurch gekennzeichnet, daß die Anwendung der hochfrequenten Schwingungsenergie früher beendet wird als die der Druckkraft.

4. Gegenstand, der Bereiche von thermoplastischen Folien aufweist, dadurch gekennzeichnet, daß die Folien nach einem Verfahren gemäß einem der Ansprüche 1 bis 3 miteinander verschweißt werden.

0 007 166

18

26

28

30

FIG. 1

21  20
16
24        14

10

12

20    26

10

21        23

12

22        FIG. 2

1

FIG. 3

FIG. 4

FIG. 5